# EUROPÄISCHE PATENTSCHRIFT

(11) **EP 1 634 358 B1**
(45) Veröffentlichungstag und Bekanntmachung des Hinweises auf die Patenterteilung: **02.01.2008**
(21) Anmeldenummer: 04734992.3
(22) Anmeldetag: 27.05.2004
(51) Int. Cl.: H02K 5/173, H02K 5/24, F16C 25/08

(54) **ELEKTRISCHE MASCHINE**
ELECTRICAL MACHINE
MACHINE ELECTRIQUE

(30) Priorität: 28.05.2003 DE 10324621
(43) Veröffentlichungstag der Anmeldung: 15.03.2006
(73) Patentinhaber: ROBERT BOSCH GMBH, 70442 Stuttgart (DE)
(72) Erfinder: HOEFS, Roland, 74354 Besigheim (DE)
(86) Internationale Anmeldenummer: PCT/DE2004/001128
(87) Internationale Veröffentlichungsnummer: WO 2004/107533

(56) Entgegenhaltungen:
- EP-A- 0 164 447
- EP-A- 1 256 732
- DE-A- 2 807 411
- DE-A- 2 939 560
- DE-A- 2 942 008
- DE-A- 19 843 226
- PATENT ABSTRACTS OF JAPAN Bd. 0103, Nr. 31 (M-533), 11. November 1986 (1986-11-11) -& JP 61 136017 A (PIONEER ELECTRONIC CORP), 23. Juni 1986 (1986-06-23)
- WERNITZ W.: 'Die Tellerfeder', 28 Oktober 1954, FACHGEMEINSCHAFT GETRIEBE U. ANTRIEBSELEMENTE IM VDMA, ARBEITSGEMEINSCHAFT DEUTSCHER KONSTRUKTIONSINGENIEURE IM VDI, ESSEN * Seite 361 - Seite 376 *

## Beschreibung

### Stand der Technik

Die Erfindung betrifft eine elektrische Maschine, insbesondere einen Generator für Kraftfahrzeuge, nach der Gattung des unabhängigen Patentanspruchs.

Aus der DE 198 04 328 A1 ist eine elektrische Maschine in der Bauform eines Drehstromgenerators bekannt, bei dem die Generatorwelle mittels eines Loslagers in der Nabe eines Gehäuseteils gelagert ist. Ein in die Nabe eingesetztes Federelement belastet dabei den Außenring des Loslagers mit einer Axialkraft, um eine definierte Rollbewegung der Wälzkörper im Loslager zu erreichen und dadurch eine längere Lebensdauer des Loslagers zu erzielen. Der Aufbau dieser Lageranordnung ist verhältnismäßig aufwändig, da etliche Bauteile erforderlich sind, um eine Axialbelastung des Kugellagers zu erreichen. Darüber hinaus ist es erforderlich, dass jeder einzelne Generator bzw. dessen Lagerstelle mittels eines Kalibrierungsschritts auf eine definierte anfängliche Axiallast eingestellt wird. Darüber hinaus ist bei einer derartig gewählten Lageranordnung nur ein verhältnismäßig steiler Kraftanstieg in axialer Richtung erreichbar, so dass sich auf Grund von Rotorlängsschwingungen ein verhältnismäßig starker Anstieg der Federkraft ergibt und demzufolge die Lagerbelastung stark ansteigt. Ein starker Anstieg der Federbelastung und damit eine insgesamt hohe Axialkraftbelastung im Lager ist nachteilig, da dadurch gegebenenfalls eine Überlast eintreten und somit die Lebensdauer des Lagers stark verkürzt sein kann.

Die DE 198 43 226 A1, der nächstliegende Stand der Technik, zeigt:
Elektrische Maschine, mit einem drehbar gelagerten Rotor, wobei zumindest ein Lager zur Abstützung des Rotors in einer Nabe dient und auf das Lager eine axial wirkende Federkraft eines Federelements wirkt, welches mittels der Federkraft an der Nabe abgestützt ist, und wobei sich das Federelement in einem Aussenbereich an einem Aussenring eines Wälzlagers abstützt.

### Vorteile der Erfindung

Die erfindungsgemäße elektrische Maschine mit den Merkmalen des Hauptanspruchs hat den Vorteil, dass ein großer Federkraftkennlinienbereich mit relativ flachem Kraftanstieg erzielbar ist. Dies bedeutet, dass über den Bereich der vorgesehenen Komprimierung des Federelements die Federkraft und demzufolge die Axialkraftbelastung des Lagers allenfalls geringfügig steigt. Die zu erwartende Lebensdauer dieses Lagers ist demzufolge deutlich erhöht.

Dadurch, dass sich das Federelement in einem Außenbereich an einem Außenring eines Wälzlagers und in einem Innenbereich an einem Nabenvorsprung abstützt, ergibt sich in Kombination mit einem auf einer Rotorwelle festsitzend befestigten Innenring des Wälzlagers hinsichtlich der Kriterien üblicher Auslegung von Wälzlagern eine gute Belastung dieses Loslagers.

Erfindungsgemäß ist weiterhin vorgesehen, dass der Nabenvorsprung eine allgemeine Ringform mit einer nach außen abfallenden konischen Federstützfläche hat. Durch diese Merkmale ergibt sich für das Federelement eine definierte Anlage im radial inneren Bereich und zusätzlich dadurch die Möglichkeit, den Wirkhebel der Federkraft unverändert bzw. nahezu unverändert zu lassen. Darüber hinaus ist eine einfache Werkzeuggeometrie zur Herstellung dieser Anlagefläche möglich, so dass auch die Standzeit des Werkzeugs verlängert wird.

Durch die in den Unteransprüchen aufgeführten Maßnahmen sind vorteilhafte Weiterbildungen der elektrischen Maschine nach dem Hauptanspruch möglich.

Dadurch, dass das als Tellerfeder ausgebildete Federelement im Wesentlichen die Form eines Kegelstumpfmantels hat, lässt sich eine hohe axiale Kraft erreichen, so dass die Wälzkörper im Wälzlager unter definierten Bedingungen auf deren Laufflächen abrollen. Es ergibt sich in der Folge eine günstige Lebensdauer für das Wälzlager.

Gemäß einem weiteren Ausführungsbeispiel ist vorgesehen, dass in Wirkrichtung zwischen dem Lager und dem Federelement ein Abstandshalter angeordnet ist. Dieser Abstandshalter ermöglicht ebenso wie der mit einer nach außen abfallenden konischen Federstützfläche versehene Nabenvorsprung eine Anordnung in der Nabe ohne eine Hebeländerung für die axial wirkende Federkraft. Die Lagerung ist dadurch in der Lage, Axialschwingungen ohne all zu starke Kraftänderungen verhältnismäßig elastisch aufzunehmen.

Ebenso kann es vorgesehen sein, dass in Wirkrichtung zwischen dem Federelement und der Nabe ein Abstandshalter angeordnet ist, der die gleichen Zwecke erfüllt.

Der Abstandshalter kann beispielsweise ein am Federelement befestigter ursprünglich separater Ring sein, so dass insgesamt eine kostengünstige Fertigung einer Kombination aus Federelement und Abstandshalter möglich ist.

### Zeichnungen

- Figur 1: zeigt in schematischer Darstellung einen Querschnitt durch eine elektrische Maschine,
- Figur 2a: zeigt einen Querschnitt durch ein Lager zur Abstützung eines Rotors mittels eines Federelements,
- Figur 2b: zeigt eine ausschnittweise vergrößerte Darstellung des Nabenvorsprungs,
- Figur 3a und 3b: zeigen zwei Ansichten des Federelements aus Figur 2a,
- Figur 4a und 4b: zeigen in stark schematischer Ansicht das Verhalten des Federelements aus Figur 3a und Figur 3b unter Belastung durch Axialschwingungen des Rotors,
- Figur 5a, 5b und 5c: zeigen drei verschiedene Ansichten eines zweiten Ausführungsbeispiels eines Federelements,
- Figur 6: zeigt ein Beispiel eines Federelements, welches das Verständnis der Erfindung erleichtert,
- Figur 7: zeigt einen Querschnitt durch die Einpasshülse aus Figur 2a.

### Beschreibung

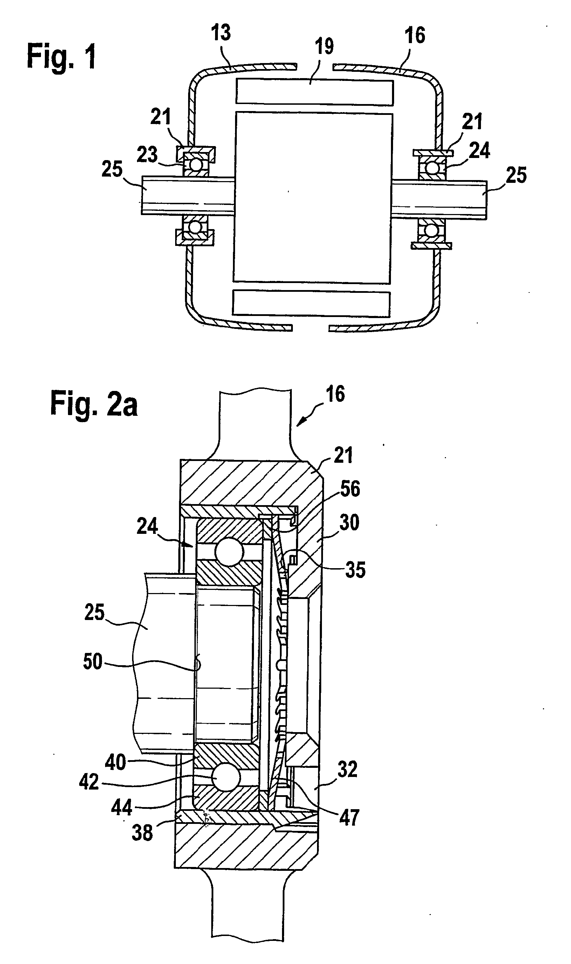

Figur 1 zeigt in stark schematischer Ansicht einen Querschnitt durch eine elektrische Maschine 10. Die elektrische Maschine 10 weist unter anderem zwei Gehäuseteile 13 und 16 auf, die unter anderem in sich einen Stator 19 aufnehmen. Die Gehäuseteile 13 und 16 weisen jeweils eine Nabe 21 auf, die dazu dient, über ein Lager 23 und ein Lager 24 die Welle 25 eines Rotors 27 zu stützen.

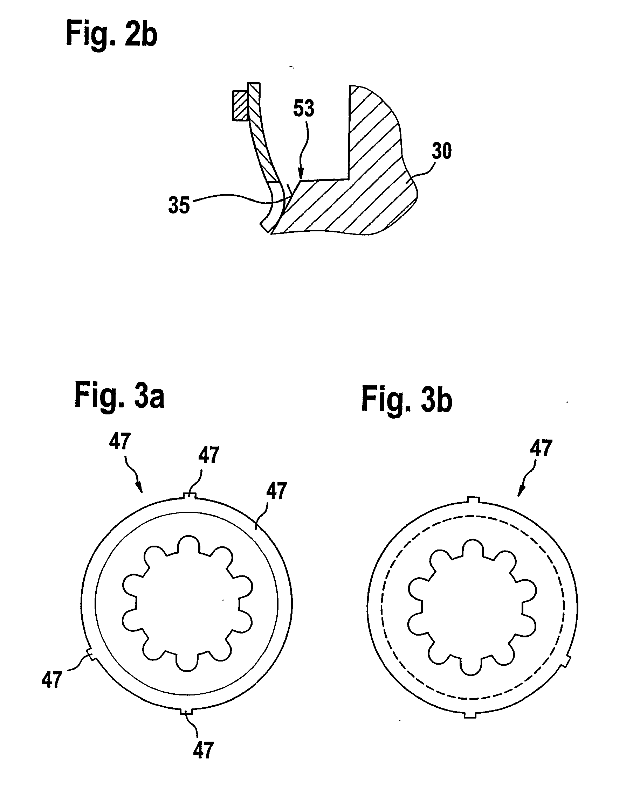

Während das in Figur 1 dargestellte linke Lager 23 ein sogenanntes Festlager ist, ist das in Figur 1 dargestellte Lager 24 ein sogenanntes Loslager. Auf dieses Loslager 24 und seine Gestaltung sowie Anordnung in der Nabe 21 wird in Figur 2 näher eingegangen.

Figur 2a zeigt in weniger schematischer Darstellung die Anordnung des rechten Lagers 24, des Loslagers in der Nabe 21, des Lagergehäuseteils 16. Das Gehäuseteil 16, oftmals auch als Lagerschild bezeichnet, weist in seiner Mitte die Nabe 21 auf, die sich zylinderringförmig axial erstreckt. An die Nabe 21 schließt sich ein sogenannter Nabenvorsprung 30 an, der sich nach radial innen erstreckt. Der Nabenvorsprung 30 ist auf der Seite der Nabe 21 angeordnet, die dem Rotor 27 abgewandt ist. Der Nabenvorsprung 30 hat eine allgemeine Ringform und ist unter anderem durch einige in radialer Richtung orientierte Speichen 32 gebildet. An die Speichen 32 schließt sich radial weiter innen eine ringförmige Federstützfläche 35 an, die Teil des Nabenvorsprungs 30 ist.

In die hohlzylindrische Nabe 21 ist ein sogenannter Einpassring 38 eingesetzt, der aus einem Kunststoff hergestellt ist. Dieser Einpassring 38 dient zur Dämpfung von Schwingungsanregungen zwischen der Nabe 21 und der Welle 25. In den Einpassring 38 ragt die Welle 25 hinein, die über das Lager 24 im Einpassring 38 gehalten ist. Das Lager 24 ist im beschriebenen Ausführungsbeispiel als ein Wälzlager ausgeführt, hier als Kugellager. Das Kugellager besteht im Wesentlichen aus einem Innenring 40, den in diesem Fall kugelförmigen Wälzkörpern 42 und dem Außenring 44.

Zwischen dem Lager 24 und dem Nabenvorsprung 30 ist ein axial wirkendes Federelement 47 eingesetzt. Das Federelement 47 ist eine Tellerfeder, die in ihrer axialen Mitte eine Öffnung aufweist, die für einen Durchtritt der Welle 25 - hier bei dann verringertem Innendurchmesser - vorgesehen ist. Die Tellerfeder 47 hat im wesentlichen die Form eines Kegelstumpfmantels und somit einen nach radial innen gerichteten Innenbereich, der sich am Nabenvorsprung 30 bzw. der Federstützfläche 35 abstützt. Mit einem nach radial außen gerichteten Außenbereich stützt sich das Federelement 47 am Außenring 44 des Lagers 24 ab. Das Lager 24 wiederum stützt sich mit seinem Innenring 40 an einer Wellenschulter 50 der Welle 25 ab.

Um eine möglichst kostengünstige Herstellung der elektrischen Maschine zu ermöglichen, ist während der Konstruktion vorgesehen worden, dass eine verhältnismäßig große Toleranz zwischen der Federstützfläche 35 und dem linken Gehäuseteil 13 zulässig ist. Des weiteren ist ebenfalls vorgesehen, dass die Lage der Wellenschulter 50 in Bezug zur Federstützfläche 35 sehr unterschiedlich sein kann, so dass bei Abstützung des Lagers 24 sowohl über die Wellenschulter 50 als auch über das Federelement 47 an der Federstützfläche 35 bei Verwendung herkömmlicher beziehungsweise bekannter Federelemente stark unterschiedliche, axial wirkende Federkräfte zwischen der Federstützfläche 35 und dem Lager 24 wirkten. Dies ist nicht erwünscht. Vielmehr ist vorgesehen, dass ein Federkraftkennlinienbereich mit einer relativ flachen Kraftverlaufskurve im Toleranzbereich vorgesehen ist. Aus diesem Grund ist vorgesehen, dass das als Tellerfeder ausgeführte Federelement um eine sogenannte Planlage der Feder betrieben wird. Die Planlage des Federelements 47 ist dabei derartig definiert, dass der Außenbereich des Federelements 47 dann die gleiche axiale Lage wie der Innenbereich des Federelements 47 hat. Dies ist gleichbedeutend mit einer dann vorliegenden Form des Federelements 47, die annähernd eine Ebene ist.

Es ist somit eine elektrische Maschine 10 vorgesehen, insbesondere als Generator für Kraftfahrzeuge ausgeführt, die einen drehbar gelagerten Rotor 27 hat, wobei zumindest ein Lager 24 zur Abstützung des Rotors 27 in der Nabe 21 dient und auf das Lager 24 eine axial wirkende Federkraft des Federelements 47 wirkt. Das Federelement 47 ist mittels der Federkraft an der Nabe 21 abgestützt. Das Federelement 47 ist eine Tellerfeder und um die Planlage des Federelements 47 betreibbar.

Das Federelement 47 stützt sich in einem Außenbereich an dem Außenring 44 des als Wälzlager ausgeführten Lagers 24 ab und in einem Innenbereich an einem Nabenvorsprung 30.

In Figur 2b ist ausschnittweise der Nabenvorsprung 30 bzw. die Federstützfläche 35 in vergrößerter Darstellung abgebildet. Zur Verdeutlichung der Formgebung der Federstützfläche 35 wurde diese in stark übertriebener Darstellung eindeutig als eine nach außen abfallende konische Federstützfläche 35 dargestellt. Diese stark konische Federstützfläche 35 hat zum Ziel, dass sich während der Axialschwingungen des Rotors 27 keine überproportional stark ansteigende Federkraft zwischen dem Nabenvorsprung 30 und dem Außenring 44 einstellt. Es ist dabei vorgesehen, dass in der Extremlage des Federelements 47, d.h. in einer besonders stark durchgefederten Lage des Federelements 47 in Richtung zum Nabenvorsprung 30, dieses Federelement 47 nicht an einer radial außen liegenden Kante 53 der Federstützfläche 35 zur Anlage kommt. Ein derartig starkes Durchdrücken des Federelements 47 würde bedeuten, dass die Federkraft nicht mehr an der nach radial außen gerichteten Seite der Federstützfläche 35 anläge, sondern beispielsweise direkt an der Kante 53. Dies hätte zur Folge, dass die Federkraft zwischen Außenring 44 und Nabenvorsprung 30 sprungartig anstiege und somit möglicherweise das Lager 24 oder das Federelement 47 überlastet würde.

Unter anderem aus dem gleichen Grund ist im Ausführungsbeispiel nach Figur 2a vorgesehen, dass zwischen dem Außenring 44 und dem eigentlichen Federteil des Federelements 47 ein Ringform aufweisender Abstandshalter 56 zwischen dem Außenbereich des Federelements 47 und dem Außenring 44 befestigt ist. Ohne diesen Abstandshalter 56 könnte das Federelement 47 in einer zum Nabenvorsprung 30 durchgedrückten Position an einer Kante der Bohrung des Innenrings 40 anliegen, wodurch sich auch hier der Wirkhebel für die axiale Kraft verkleinerte und dadurch die Federkraft sprungartig anstiege. Zudem weist der Abstandshalter 56 eine Konizität auf. Der Abstandshalter 56 hat im wesentlichen die Form eines Kegelstumpfmantels, deren größere Öffnung zum Federelement 47 gerichtet ist. Die Konizität beträgt beispielsweise 7° (Kegelwinkel somit 14°). Der Abstandshalter 56 liegt somit mit einer im wesentlichen schmalen kreisringförmigen Fläche radial aussen am Federelement 47 an und kann auch über diese kreisringförmige Fläche mit dem Federelement 47 verbunden bzw. an diesem befestigt werden, beispielsweise durch eine stoffschlüssige Verbindungstechnik wie Schweißen, Löten oder Kleben. Der Abstandshalter 56 vermeidet bei dieser Gestalt eine Wirkebelverkürzung im Bereich des Übergangs vom Federelement 47 zum Abstandshalter 56, die bei ebenem Abstandshalter 56 und gleichzeitig stark durchgedrücktem Federelement 47 aufträte. Das Federelement 47 läge sonst an der radial innen liegenden, zum Federelement 47 gerichteten Kante des Abstandshalters 56 an, woduch sich die Belastung des Federelements erhöhte. Ein weiterer Grund für diesen Abstandshalter 56 besteht darin, dass durch den Abstandshalter 56 ein Anliegen des Federelements 47 am Innenring 40 im belasteten bzw. durchgedrückten Zustand des Federelements 47 ausgeschlossen werden kann. Andernfalls bestünde die Gefahr eines Durchscheuerns. Es ist somit in Wirkrichtung zwischen dem Lager 24 und dem Federelement 47 ein Abstandshalter 56 angeordnet.

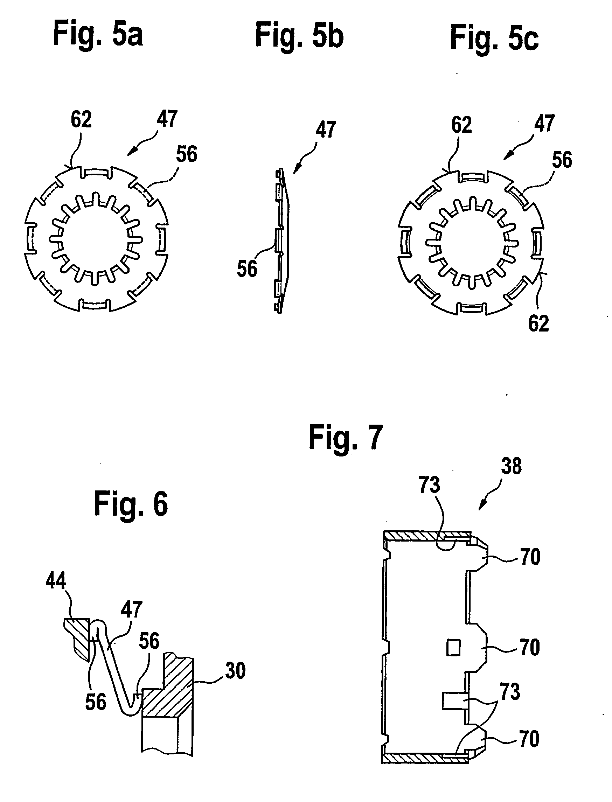

In Figur 3a ist, bezogen auf Figur 2a, eine Ansicht des Federelements 47 von links dargestellt. Dementsprechend ist die in Figur 3b dargestellte Ansicht des Federelements 47 eine Ansicht von rechts. Deutlich zu erkennen ist die Ringform des Abstandshalters 56 sowie des Federelements 47. Das Federelement 47 weist einen insgesamt wellenförmig geformten Innenbereich auf. Am Außenrand des Abstandshalters 56 sind in diesem Beispiel insgesamt drei Zapfen 59 ausgebildet, deren Funktion weiter unten im Zusammenhang mit Figur 7 erläutert werden. Die Zahl der Zapfen 59 kann davon auch abweichen; so sind beispielsweise auch vier oder sechs Zapfen möglich.

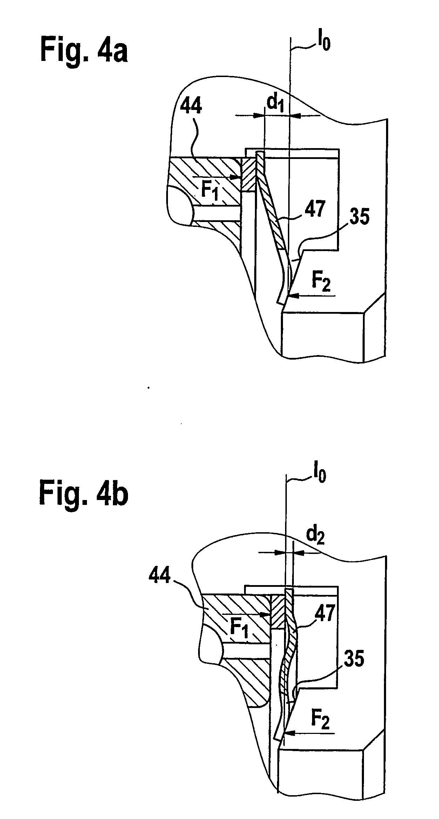

In Figur 4a und Figur 4b ist eine schematische Ansicht des Federelements 47 dargestellt. In beiden Fällen sind die axialen Auslenkungen des Federelements 47 stark übertrieben dargestellt, um die Veränderungen gut zu veranschaulichen. Figur 4a gibt die Kräfte- und Lageverhältnisse eines ersten Betriebszustands wieder, wonach an der radialen Innenseite des Federelements 47 eine Stützkraft F₂ zwischen der Federstützfläche 35 und dem Federelement 47 wirkt. Eine gleich große Kraft F₁ wirkt zwischen dem Außenring 44 und in diesem Fall dem Abstandshalter 56. Als Bezugslinie wurde die Linie I₀ gewählt, die in diesem Fall in der Berührungsebene zwischen dem Federelement 47 und der Federstützfläche 35 liegt. Die axiale Höhe des Federelements 47 zwischen der dem Nabenvorsprung 30 zugewandten Seite des Federelements 47 und der Berührungsebene beträgt d₁. Der weitere Extremfall in Figur 4b zeigt ein voll nach rechts durch die Planlage durchgefedertes Federelement 47, wobei die dem Nabenvorsprung 30 zugewandte Seite des Federelements 47 nunmehr jenseits der Planlage l₀ liegt, d₂. Es ist ebenso verdeutlicht, dass die nunmehr zwischen dem Außenring 44 und dem Federelement 47 sowie zwischen dem Federelement 47 und dem der Federstützfläche 35 wirkende Kraft F₂ in etwa die Größe der zuvor wirkenden Kraft F₁ aufweist.

In Figur 5a, Figur 5b und Figur 5c ist ein weiteres Ausführungsbeispiel eines Federelements 47 in drei verschiedenen Ansichten dargestellt. Analog zur Figur 3a ist die Darstellung in Figur 5a ebenfalls eine Ansicht von links, dementsprechend ist die Ansicht in Figur 5c analog zur Darstellung in Figur 3b eine Ansicht von rechts. Wie bereits das zuvor beschriebene Ausführungsbeispiel des Federelements 47, weist auch dieses Ausführungsbeispiel einen radialen Innenbereich auf, der allgemein wellenförmig ausgebildet ist. Der Außenbereich des Federelements 47 ist in kurzen Abständen geschlitzt und weist abwechselnd radiale Passelemente 62 auf, die zur konzentrischen Positionierung des Federelements 47 im Einpassring 38 und somit auch zur konzentrischen Positionierung zur Rotorachse dienen. Alternativ kann auch eine unmittelbare konzentrischen Positionierung zwischen dem Federelement 47 und der Nabe 21 erfolgen. Zwischen den Passelementen sind Abstandshalter 56 angeordnet, die sich wie in den vorangegangenen Ausführungsbeispielen am Außenring 44 abstützen. Diese Abstandshalter 56 sind insgesamt bogenförmig und sind in etwa rechtwinklig abgewinkelt.

Figur 6 zeigt ein Beispiel eines Federelements 47, welches das Verständnis der Erfindung erleichtert. Dabei ist vorgesehen, dass das Federelement 47 und der Abstandshalter 56 zum Außenring 44 einstückig ausgeführt sind. Zusätzlich, jedoch für sich auch einzeln anwendbar, ist ein weiterer Abstandshalter 56 in Wirkrichtung zwischen dem Federelement 47 und der Nabe 21 angeordnet, der in diesem Fall auch einstückig angeformt ist.

In Figur 7 ist schließlich der Einpassring 38 in einer Schnittdarstellung abgebildet. Der Einpassring 38 weist an einem axialen Ende Einführzapfen 70 auf, die zwischen die Speichen 32 des Gehäuseteils 16 geschoben werden und darüber hinaus, wie auch in Figur 2a dargestellt, als Schnapphaken ausgebildet sind und in Nuten zwischen den Speichen 32 eingreifen. Abschnitte zwischen den Zapfen 70 wirken darüber hinaus mit den Speichen 32 derartig zusammen, dass die Speichen 32 als Anschlag für den Einpassring 38 ausgebildet sind. Die Zapfen 70 begrenzen einerseits ein Spiel des Einpassrings 38 in axialer Richtung nach links und die Zwischenräume zwischen den Zapfen 70 ein Spiel nach rechts, so dass sich insgesamt eine definierte Lage des Einpassrings 38 in der Nabe 21 ergibt. Am zylindrischen Innenumfang des Einpassrings 38 sind darüber hinaus im Beispiel drei Nuten 73 ausgebildet, in die die bereits erwähnten Zapfen 59, siehe auch Figur 3a und 3b, eingefügt werden, so dass sich eine insgesamt eindeutige Lage des Federelements 47 gemäß dem Ausführungsbeispiel aus Figur 2a, 3a und 3b im Einpassring 38 ergibt. Eine falsche Lage des Federelements 47 in der Nabe 21 ist dadurch auszuschließen. Für den Fall, dass eine eindeutige Zuordnung zwischen Federelement 47 und Nabe 21 nicht erforderlich ist, können die Zapfen 59 und Nuten 73 auch gleichmäßig am Umfang verteilt sein.

## Patentansprüche

1. Elektrische Maschine, insbesondere Generator für Kraftfahrzeuge, mit einem drehbar gelagerten Rotor (27), wobei zumindest ein Lager (24) zur Abstützung des Rotors (27) in einer Nabe (21) dient und auf das Lager (24) eine axial wirkende Federkraft eines Federelements (47) wirkt, welches mittels der Federkraft an der Nabe (21) abgestützt ist, wobei das Federelement (47) eine Tellerfeder ist, um seine Planlage betreibbar ist und sich das Federelement (47) in einem Außenbereich an einem Außenring (44) eines Wälzlagers (24) und in einem Innenbereich an einem Nabenvorsprung (30) mit einer allgemeinen Ringform mit einer nach außen abfallenden konischen Federstützfläche (35) abstützt.

2. Elektrische Maschine nach einem der vorstehenden Ansprüche, **dadurch gekennzeichnet, dass** das als Tellerfeder ausgebildete Federelement (47) im Wesentlichen die Form eines Kegelstumpfmantels hat.

3. Elektrische Maschine nach einem der vorstehenden Ansprüche, **dadurch gekennzeichnet, dass** in Wirkrichtung zwischen dem Lager (24) und dem Federelement (47) ein Abstandshalter (56) angeordnet ist.

4. Elektrische Maschine nach einem der vorstehenden Ansprüche, **dadurch gekennzeichnet, dass** in Wirkrichtung zwischen dem Federelement (47) und der Nabe (21) ein Abstandshalter (56) angeordnet ist.

5. Elektrische Maschine nach Anspruch 3 oder 4, **dadurch gekennzeichnet, dass** der Abstandshalter (56) ein am Federelement (47) befestigter Ring ist.

## Claims

1. Electrical machine, in particular generator for motor vehicles, having a rotatably mounted rotor (27), at least one bearing (24) serving the purpose of supporting the rotor (27) in a hub (21), and an axially acting spring force of a spring element (47) acting on the bearing (24), which spring element is supported on the hub (21) by means of the spring force, the spring element (47) being a disc spring, being capable of being operated about its plane position and being supported in an outer region on an outer ring (44) of a roller bearing (24) and in an inner region on a hub projection (30) having a general annular shape having a conical spring supporting face (35) which falls away outwards.

2. Electrical machine according to one of the preceding claims, **characterized in that** the spring element (47) in the form of a disc spring substantially has the shape of a truncated cone envelope.

3. Electrical machine according to one of the preceding claims, **characterized in that** a spacer (56) is arranged in the direction of action between the bearing (24) and the spring element (47).

4. Electrical machine according to one of the preceding claims, **characterized in that** a spacer (56) is arranged in the direction of action between the spring element (47) and the hub (21).

5. Electrical machine according to Claim 3 or 4, **characterized in that** the spacer (56) is a ring fixed to the spring element (47).

## Revendications

1. Machine électrique, en particulier générateur pour véhicules automobiles, comprenant un rotor (27) logé en rotation, au moins un palier (24) servant à supporter le rotor (27) dans un moyeu (21), et dont le palier (24) subit une force élastique axiale d'un élément de ressort (47) qui prend appui sur le moyeu (21) au moyen de la force élastique, l'élément de ressort (47) étant une rondelle Belleville pouvant tourner autour de sa position plane, et l'élément de ressort (47) prenant appui dans une zone extérieure sur une bague extérieure (44) d'un palier à roulement (24) et dans une zone intérieure sur une saillie de moyeu (30) d'une forme générale annulaire avec une surface d'appui de ressort (35) conique inclinée vers l'extérieur.

2. Machine électrique selon la revendication précédente,
**caractérisée en ce que**
l'élément de ressort (47) en forme de rondelle Belleville présente essentiellement la forme d'une enveloppe à flancs tronconiques.

3. Machine électrique selon l'une quelconque des revendications précédentes,
**caractérisée en ce qu'**
un écarteur (56) est disposé dans la direction d'action entre le palier (24) et l'élément de ressort (47).

4. Machine électrique selon l'une des revendications précédentes,
**caractérisée en ce qu'**
un écarteur (56) est disposé dans la direction d'action entre l'élément de ressort (47) et le moyeu (21).

5. Machine électrique selon la revendication 3 ou 4,
**caractérisée en ce que**
l'écarteur (56) est une bague fixée à l'élément de ressort (47).
